(19) Europäisches Patentamt
European Patent Office
Office européen des brevets

(11) EP 4 625 930 A1

(12) EUROPEAN PATENT APPLICATION
published in accordance with Art. 153(4) EPC

(43) Date of publication:
**01.10.2025 Bulletin 2025/40**

(21) Application number: **23902407.8**

(22) Date of filing: **17.11.2023**

(51) International Patent Classification (IPC):
***H04L 43/028*** *(2022.01)*

(52) Cooperative Patent Classification (CPC):
**H04L 43/028; H04L 43/0894**

(86) International application number:
**PCT/CN2023/132389**

(87) International publication number:
**WO 2024/125207 (20.06.2024 Gazette 2024/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.12.2022 CN 202211640801**

(71) Applicant: **Huawei Technologies Co., Ltd.**
**Shenzhen, Guangdong 518129 (CN)**

(72) Inventors:
- **WANG, Xingchun**
  **Shenzhen, Guangdong 518129 (CN)**
- **WANG, Baoyi**
  **Shenzhen, Guangdong 518129 (CN)**

(74) Representative: **Maiwald GmbH**
**Engineering**
**Elisenhof**
**Elisenstrasse 3**
**80335 München (DE)**

# (54) NETWORK QUALITY ANALYSIS METHOD AND SYSTEM, AND ELECTRONIC DEVICE

(57) This application relates to the field of communication technologies, and discloses a network quality analysis method and system, and an electronic device. The method includes: determining a quantity of first network access records that meet a network impact factor condition in network access records of each cell in a target area, and a total quantity of first network access records that meet the network impact factor condition in network access records of all cells in the target area; determining a sampling ratio of the network access records of each cell based on the quantity of first network access records corresponding to each cell and the total quantity of first network access records corresponding to all the cells; obtaining, from the first network access record of each cell based on the sampling ratio of the network access records of each cell, a second network access record corresponding to each cell; and determining a network quality analysis result of the target area based on the second network access record corresponding to each cell. Based on the foregoing solution, the network access record that meets the network impact factor condition can be selected for analysis, so that an amount of data to be analyzed is reduced, and accuracy of the analysis result is improved.

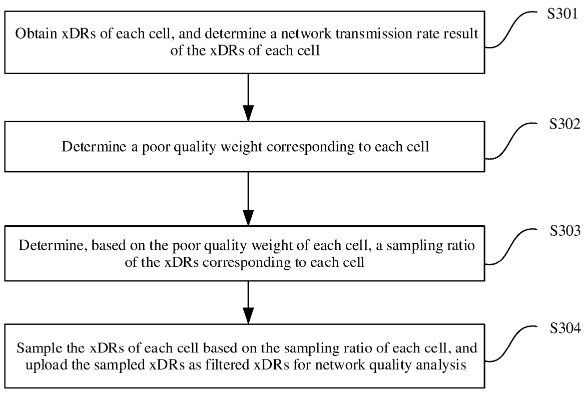


FIG. 3A

EP 4 625 930 A1

## Description

This application claims priority to Chinese Patent Application No. 202211640801.5 filed with the China National Intellectual Property Administration on December 16, 2022, and entitled "NETWORK QUALITY ANALYSIS METHOD AND SYSTEM, AND ELECTRONIC DEVICE", which is incorporated herein by reference in its entirety.

## TECHNICAL FIELD

This application relates to the field of service communication technologies, and in particular, to a network quality analysis method and system, and an electronic device.

## BACKGROUND

With development of communication technologies, a network has become an inseparable part of people's daily life, and types and a quantity of users in the network are increasing greatly. To better provide a service for a user, an operator parses network access traffic of the user by using deep packet inspection (deep packet inspection, DPI), and generates an x detail record (x detail record, xDR). Then, the operator uses a service experience quality analysis platform to analyze the x detail record that reflects traffic usage of the user to obtain a network quality analysis result, to help the user optimize network quality.

With the increase of the network traffic, a quantity of xDRs generated by DPI increases linearly, causing a linear increase in a quantity of servers used to support the service experience quality analysis platform. Consequently, the operator needs to invest large amounts of manpower and material resources. To reduce investment, the operator uses DPI to randomly select some xDRs from generated xDRs for subsequent network quality analysis. However, accuracy of a network quality analysis result obtained by the service experience quality analysis platform based on the some randomly selected xDRs is low.

## SUMMARY

An objective of this application is to provide a network quality analysis method and system, and an electronic device, to improve accuracy of an analysis result while reducing an amount of data to be analyzed, thereby helping a user optimize a network.

According to a first aspect, this application provides a network quality analysis method, applied to a network quality analysis system. The method includes: determining a quantity of first network access records that meet a network impact factor condition in network access records of each cell in a target area, and a total quantity of first network access records that meet the network impact factor condition in network access records of all cells in the target area; determining a sampling ratio of the network access records of each cell based on the quantity of first network access records corresponding to each cell and the total quantity of first network access records corresponding to all the cells; obtaining, from the first network access record of each cell based on the sampling ratio of the network access records of each cell, a second network access record corresponding to each cell; and determining a network quality analysis result of the target area based on the second network access record corresponding to each cell.

It may be understood that, based on a quantity of network access records (that is, x detail records) that meet the network impact factor condition in the network access records of each cell, it is convenient to learn of a network quality status related to the network impact factor in each cell. Then, the sampling ratio of the network access records of each cell is determined based on a quantity of network access records that meet the network impact factor condition and that are of each cell and a total quantity of network access records that meet the network impact factor condition and that are of all cells. In addition, network access records of a corresponding ratio are selected from the network access records of each cell based on the sampling ratio of the network access records of each cell. In this case, the selected network access records of the corresponding ratio are more representative, so that an obtained analysis result is more accurate when the selected network access records of the corresponding ratio are used for network quality analysis. In other words, according to the method provided in this application, an amount of data to be analyzed is reduced, and accuracy of the analysis result is improved, thereby better helping a user optimize a network and improving user experience.

In a possible implementation of the first aspect, at least one of a transmission rate threshold, an application type, and a service type that meet the network impact factor condition is preset, and that the network impact factor condition is met includes at least one of the following: a network transmission rate corresponding to the network access record is less than the preset transmission rate threshold; an application corresponding to the network access record belongs to the preset application type; and a service corresponding to the network access record belongs to the preset service type.

It may be understood that the network transmission rate, the application, and the service may all reflect a requirement of the user, so that selected network access records of a corresponding ratio of the user are network access records that meet a network quality requirement of the user, thereby helping the user optimize the network.

In a possible implementation of the first aspect, the preset application type includes at least one of the following: a video application, a payment application, and a social application.

In a possible implementation of the first aspect, the preset service type includes a video service and/or a voice over IP service.

In a possible implementation of the first aspect, a manner of determining the first network access record that meets the network impact factor condition in the network access records of each cell includes: determining, based on the network transmission rate corresponding to each network access record of each cell and the preset transmission rate threshold, that a network access record whose network transmission rate is less than the preset transmission rate threshold in the network access records of each cell is the first network access record; and/or determining, based on an application feature corresponding to each network access record of each cell and a relationship between the application feature and the preset application type, that a network access record whose corresponding application belongs to the preset application type in the network access records of each cell is the first network access record; and/or determining, based on a service feature corresponding to each network access record of each cell and a preset relationship between the service feature and a service type, that a network access record whose corresponding service belongs to the preset service type in the network access records of each cell is the first network access record.

In a possible implementation of the first aspect, the determining a sampling ratio of the network access record of each cell based on the quantity of first network access records corresponding to each cell and the total quantity of first network access records corresponding to all the cells includes: using a ratio of the quantity of first network access records corresponding to each cell in the total quantity of first network access records corresponding to all the cells as the sampling ratio of the network access record of each cell.

It may be understood that, when a proportion of network access records that are corresponding to each cell and that meet the network impact factor condition is large, more user network access records of the cell are sampled. Therefore, a network quality analysis result obtained by a service experience quality analysis platform based on the obtained user network access record can truly reflect network quality.

According to a second aspect, this application provides a network quality analysis system, including a deep packet parsing system and a service experience quality analysis platform, where the deep packet parsing system is configured to: determine a quantity of first network access records that meet a network impact factor condition in network access records of each cell in a target area, and a total quantity of first network access records that meet the network impact factor condition in network access records of all cells in the target area; determine a sampling ratio of the network access records of each cell based on the quantity of first network access records corresponding to each cell and the total quantity of first network access records corresponding to all the cells; obtain, from the first network access record of each cell based on the sampling ratio of the network access records of each cell, a second network access record corresponding to each cell; and send the second network access record corresponding to each cell to the service experience quality analysis platform; and the service experience quality analysis platform is configured to: determine a network quality analysis result of the target area based on the second network access record corresponding to each cell.

In a possible implementation of the second aspect, the deep packet parsing system is further configured to preset at least one of a transmission rate threshold, an application type, and a service type that meet the network impact factor condition, where the network impact factor condition includes at least one of the following: a network transmission rate corresponding to the network access record is less than the preset transmission rate threshold; an application corresponding to the network access record belongs to the preset application type; and a service corresponding to the network access record belongs to the preset service type.

According to a third aspect, this application provides an electronic device, including:

one or more processors; and
one or more memories, where the one or more memories store one or more programs, and when the one or more programs are executed by the one or more processors, the electronic device is enabled to perform any network quality analysis method in the first aspect and the implementations of the first aspect.

According to a fourth aspect, this application provides a computer-readable storage medium. The storage medium stores instructions. When the instructions are executed on a computer, the computer is enabled to perform any network quality analysis method in the first aspect and the implementations of the first aspect.

## BRIEF DESCRIPTION OF DRAWINGS

FIG. 1 is a diagram of a process in which an operator analyzes network quality based on a network access traffic status of users when deep packet inspection DPI is deployed on a serving gateway SGW side according to some embodiments of this application;
FIG. 2 is a diagram of a process of analyzing network quality based on an xDR corresponding to network access statuses of users with reduced input according to some embodiments of this application;
FIG. 3A is a flowchart of a method for obtaining, by a DPI system 03, a sampled xDR to perform network quality analysis according to some embodiments of this application;

FIG. 3B is a diagram of a network quality analysis process corresponding to five cells according to some embodiments of this application;

FIG. 4 is a flowchart of a method for obtaining a poor QoE prediction model in a machine learning model training manner based on an xDR sample used to determine the poor QoE prediction model according to some embodiments of this application;

FIG. 5 is a scenario in which a poor QoE prediction model is obtained by using a network data analysis function included in a network element defined in 3GPP (the 3rd Generation Partnership Protocol), and a DPI system 03 performs network quality analysis by using the determined poor QoE prediction model according to some embodiments of this application;

FIG. 6 is a procedure in which a DPI system 03 interacts with a network data analysis function platform 05 in a manner of "subscription-event-based reporting" defined by 3GPP according to some embodiments of this application; and

FIG. 7 is a diagram of a structure of a server 200 according to some embodiments of this application.

## DESCRIPTION OF EMBODIMENTS

Illustrative embodiments of this application include but are not limited to a network quality analysis method and system, and an electronic device.

The following first briefly describes some terms in this application.

Network traffic is an amount of data transmitted on a network. In some embodiments of this application, the network traffic is an internet protocol (internet protocol, IP) data packet.

An x detail record (x detail record, xDR) includes user network access record information, and may be used to analyze a user network access status. In some embodiments of this application, one user may correspond to a plurality of xDRs.

A network data analysis function (network data analysis function, NWDAF) is a network element defined in 3GPP (the 3rd generation partner program protocol), and may provide a network analysis service based on request data of a network service. In some embodiments of this application, the NWDAF may be configured to train a machine learning model based on a feature training sample, and generate a prediction model.

Deep packet inspection (deep packet inspection, DPI) is a deep inspection technology based on a data packet, and may be used for network data traffic monitoring. Deep packet inspection is usually deployed on a network element side to collect network traffic and generate the x detail record (xDR).

A service experience quality analysis platform is used to analyze network access traffic usage of the user based on the xDR, to help the user optimize the network.

A network element (network element, NE) includes one or more chassis or subracks, and can independently complete a transmission function. It may be understood that the network element includes a base station, a serving gateway (serving gate way, SGW), a public data network (public data network, PDN), a user plane function (user plane, UPF), and the like.

It may be understood that, for a long term evolution (long term evolution, LTE) network, DPI is usually deployed on an SGW side to collect traffic. For a 5th generation mobile communication technology (5th generation mobile communication technology, 5G), DPI is usually deployed on a UPF side to collect traffic. DPI parses the traffic, generates an xDR, and reports the xDR to the service experience quality analysis platform. The service experience quality analysis platform analyzes the network access status based on the received xDR. In some embodiments of this application, the service experience quality analysis platform may measure network quality based on the xDR corresponding to the network access status of the user.

The following describes the technical solutions of this application in detail with reference to the accompanying drawings.

It may be understood that the technical solutions of this application may be not only applied to a 4G network, but also applied to a 5G network. Any network to which the technical solutions of this application can be applied falls within the protection scope of this application. The following uses an example in which a DPI system is deployed on the SGW side to collect traffic in the 4G network for description.

FIG. 1 is a diagram of a process in which an operator analyzes network quality based on a network access traffic status of users when deep packet inspection DPI is deployed on the serving gateway SGW side according to some embodiments of this application. As shown in FIG. 1, network access traffic of the user is transferred to a service gateway SGW 02 through a base station/evolved NodeB (Evolved NodeB, eNB) 01, and the network access traffic that is of the user and that is transmitted between the NodeB 01 and the SGW 02 is duplicated at an optical splitting point that is between the NodeB 01 and the SGW 02 and that is close to the SGW 02. Then, the duplicated network access traffic is sent to a DPI system 03. The DPI system 03 parses the obtained traffic to obtain a corresponding xDR, and sends the xDR to a service experience quality analysis platform 04. After receiving the xDR, a receiving and distributing module 041 in the service experience quality analysis platform 04 sends the xDR to a calculation module 042 and a storage module 044 in the platform. The calculation module 042 may perform calculation and the like on a statistical result of each dimension in the xDR, and send a calculation result to a service quality analysis module 043 in the platform. The service quality analysis module 043 analyzes the calculation result, to analyze user network quality. After receiving the xDR, the storage module 044 stores the xDR for other use.

It may be understood that, in some embodiments, the DPI system 03 and the service experience quality analysis platform 04 need to be deployed on a server. The DPI system 03 and the service experience quality analysis platform 04 may be deployed on an independent server, or may be deployed on a server cluster including a plurality of servers, or on a cloud server. However, with the increase of data service traffic, a quantity of xDRs generated by DPI increases linearly, causing a linear increase in a quantity of servers used to support the service experience quality analysis platform. Consequently, the operator needs to invest large amounts of manpower and material resources.

FIG. 2 is a diagram of a process of measuring network quality based on an xDR corresponding to network access statuses of users with reduced input according to some embodiments of this application. It may be understood that users may be generally classified into a very important person (Very Important Person, VIP) user and a non-very important person user. In some embodiments, to reduce investment of the operator, the DPI system 03 may filter, in a random sampling manner, xDRs that are of all cells in an area and that are obtained through parsing, to obtain a small quantity of xDRs, and then the service experience quality analysis platform 04 analyzes network quality by using the small quantity of xDRs. Specifically, because a quantity of VIP users is generally less than 10% of users in a city and the VIP users are important users, the DPI system 03 retains all xDRs corresponding to the VIP users, and randomly samples xDRs of non-VIP users based on a preset ratio. For example, 10% of xDRs corresponding to the non-VIP users are randomly sampled, and the retained xDRs of the VIP users and the sampled xDRs of the non-VIP users are used as filtered xDRs and sent to the service experience quality analysis platform 04. Then, the service experience quality analysis platform 04 analyzes a network quality status based on the received xDRs. Because a quantity of xDRs that need to be processed by the service experience quality analysis platform 04 is reduced, a configuration of the service experience quality analysis platform 04 may be reduced. For example, a quantity of servers corresponding to the service experience quality analysis platform 04 is reduced, so that the operator reduces investment. Random sampling generally uses a step size method, that is, xDRs corresponding to every N non-VIP users are obtained until the obtained xDRs reach the preset ratio.

However, due to uncertainty of random sampling, the xDRs that are of the non-VIP users and that are selected through random sampling may not be representative. As a result, a network quality analysis result cannot reflect an actual network environment. For example, because a randomly selected user is located at a good location with good network coverage, the randomly selected user is a user corresponding to good network quality. When the service experience quality analysis platform 04 calculates, based on the xDRs selected through random sampling, an experience indicator corresponding to the network quality analysis result, for example, a download success rate or a lagging status, an obtained experience indicator result is good. Consequently, the obtained network quality analysis result is inaccurate. In addition, a purpose of network quality analysis is to meet a user requirement and help customers optimize a network. In this case, a network quality analysis result that does not match the user requirement cannot help the customers optimize the network. The user requirement may be that network quality needs to be optimized when a network transmission rate is low, or the network needs to be optimized when an important application (Application, APP) is run, or the network needs to be optimized when an important service is performed, or the like.

To ensure that the selected xDRs are representative and can provide an actual network quality analysis result, this application provides a network quality analysis method. Specifically, network impact factors of each cell in an area are first collected, where these network impact factors can accurately feed back and analyze a user network access status corresponding to network quality required by a user. Then, based on network impact factors of different cells, a sampling ratio for collecting an xDR of a user in each cell is determined, xDRs of each cell is sampled based on the determined sampling ratio, and the sampled xDRs are used for network quality analysis to obtain a network quality analysis result of the area. In this way, the analysis result that accurately feeds back network quality required by the user is obtained while an amount of data to be analyzed is reduced, thereby helping the user optimize the network.

It may be understood that the network impact factors mentioned in this embodiment of this application may include any factor that can reflect actual network usage of the user, for example, may be a network quality factor, for example, a pipeline indicator such as a network transmission rate and round trip time (Round Trip Time, RTT), or a page loading delay, or may be a service usage status, an application usage status, or the like that reflects network quality required by the user.

It may be understood that the cell in embodiments of this application is a cell corresponding to a cell ID (Cell ID).

Specifically, the following uses an example in which the network impact factor is the network transmission rate for description. In some embodiments of this application, to collect network impact factors of each cell in an area, xDRs of users are collected from each cell in advance. Then, a status of a network transmission rate indicated by each obtained xDR is analyzed. For example, whether a network transmission rate represented by an xDR meets a network transmission rate required for normal network transmission (that is, a preset network transmission rate threshold) is analyzed. If the network transmission rate indicated by the xDR does not meet the network transmission rate required for normal network transmission, it is considered that the network transmission rate indicated by the xDR is poor (referred to as poor QoE below). If the network transmission rate indicated by the xDR meets the network transmission rate required for normal network transmission, it is considered that the network transmission rate indicated by the xDR is good (referred to as good QoE below). Then, a quantity of xDRs with poor network transmission rates in each cell is counted (the quantity is referred to as a poor QoE statistical value below), and a poor QoE weight of each cell is calculated. The poor QoE weight may be a ratio of a poor QoE statistical value of a cell in a total quantity of xDRs with poor network transmission rates in an entire area.

Finally, based on the determined poor QoE weight of each cell, an xDR sampling ratio of users in each cell is determined for subsequent analysis. For example, if poor QoE weights corresponding to a cell A and a cell B are 40% and 10% respectively, sampling ratios corresponding to the cell A and the cell B may be 50% and 18% respectively.

It may be understood that the network impact factor being the network transmission rate in the foregoing embodiment is merely an example for description. As mentioned above, the network impact factor may further include a network quality factor, for example, a pipeline indicator such as round trip time (Round Trip Time, RTT), and an experience indicator such as a page loading delay, or may be a service usage status, an application usage status, or the like that reflects network quality required by the user.

In some embodiments, for the application usage status, a quantity of xDRs indicating important application types in each cell (the quantity is referred to as an application statistical value below) may be counted based on obtained xDRs. Then, a ratio of the quantity of xDRs indicating the important application types in each cell in a quantity of xDRs indicating important application types in all cells (the ratio is referred to as an "application weight" below) is calculated. Finally, a sampling ratio of xDRs of users in subsequent analysis is determined based on the calculated application weight.

It may be understood that, in some applications that need to access the network when used by the users, such as a video application, a payment application, a social application, an email, and a note, applications such as the video application, the payment application, and the social application may be considered as important applications because these applications are frequently used by the users.

For another example, for the service usage status, a quantity of xDRs indicating important service types in each cell (the quantity is referred to as a service statistical value below) is counted based on obtained xDRs. Then, a ratio of the quantity of xDRs indicating the important service types in each cell in a quantity of xDRs indicating important service types in all cells (the ratio is referred to as a "service weight" below) is calculated. Finally, the sampling ratio of xDRs of users in subsequent analysis is determined based on the calculated service weight.

It may be understood that, in some services that need to access the network when used by the users, such as a video service, a voice over IP (voice over internet protocol, VoIP) service, and a page browsing service, the video service and the voice over IP (voice over internet protocol, VoIP) service are considered as important services because these services facilitate communication between the users and others.

It may be understood that, when a service weight or an application weight corresponding to each cell is large, more obtained xDRs of the cell are sampled. Therefore, an experience indicator obtained by the service experience quality analysis platform 04 based on the xDRs obtained through sampling can truly reflect network quality corresponding to the application usage status.

It may be understood that a network impact factor condition may be set. Whether an xDR meets the corresponding network impact factor condition is determined based on a relationship between a feature corresponding to a network impact factor in the xDRs of each cell and the corresponding network impact factor condition. For example, for the network transmission rate, the network impact factor condition is set to that the network transmission rate is less than a preset transmission rate threshold, and an xDR whose network transmission rate is less than the preset transmission rate threshold in network access records of each cell is determined based on a network transmission rate corresponding to each network access record of each cell and the preset transmission rate threshold. For an application, the network impact factor condition is set to that the application belongs to a preset application type, and an xDR that corresponds to an application belonging to the preset application type and that corresponds to each xDR of each cell is determined based on an application feature corresponding to each xDR of each cell and a relationship between the application feature and the preset application type. For a service, the network impact factor condition is set to that the service belongs to a preset service type, and an xDR that corresponds to a service belonging to the preset service type and that corresponds to each xDR of each cell is determined based on a service feature corresponding to each xDR of each cell and a relationship between the service feature and the preset service type.

It may be understood that the preset application type is an important application type, and the preset service type is an important service type.

It may be understood that, in some embodiments, the collected xDR of the user may be determined by using a trained machine learning model, to obtain a result reflecting the network impact factors. For example, a trained poor QoE prediction model may be used to determine whether a network transmission rate of a collected xDR of the user is good (that is, greater than or equal to a network transmission rate threshold) or poor (that is, less than the network transmission rate threshold) (in the following, a case corresponding to good is referred to as "good QoE" for short, and a case corresponding to poor is referred to as "poor QoE" for short). A trained application prediction model may be used to determine whether an application type indicated by the collected xDR of the user is an important application type or an unimportant application type. A trained service prediction model may be used to determine whether a service type indicated by the collected xDR of the user is an important service type or an unimportant service type.

It may be understood that, when the xDR of the user in each cell is sampled, sampling may be performed based on a sampling ratio that is of each cell and that corresponds to any determined network impact factor.

It may be understood that machine learning may be a decision tree, Bayes, a random forest, or another deep learning model, for example, a CNN (convolutional neural network), a DBN (deep belief network), or an RNN (recurrent neural network).

The following provides specific descriptions with reference to the accompanying drawings by using an example in which the network impact factor is the network transmission rate.

FIG. 3A is a flowchart of a method for obtaining, by the DPI system 03 according to the technical solutions mentioned in this application, a required xDR from xDRs of each cell for network quality analysis according to some embodiments of this application. After obtaining the xDRs of each cell, the DPI system 03 predicts the received xDRs to obtain network transmission rate results (poor QoE/good QoE) corresponding to the xDRs, determines a poor QoE weight corresponding to each cell, and determines a sampling ratio of each cell based on the poor QoE weight corresponding to each cell, so that the DPI system 03 samples an xDR of a user based on the sampling ratio of each cell. The method may be executed by a processor in the DPI system 03. Specific steps are as follows.

S301: Obtain the xDRs of each cell, and determine a network transmission rate result of the xDRs of each cell.

In some embodiments, the DPI system 03 may determine, based on a predetermined poor QoE prediction model, whether the network transmission rate result of the xDRs of each cell is poor QoE or good QoE. The predetermined poor QoE prediction model may be obtained by training a machine learning model. A specific obtaining process is specifically described in FIG. 4 below.

For example, five cells corresponding to an entire city shown in FIG. 3B are used as an example: a cell A, a cell B, a cell C, a cell D, and a cell E. There are users in each cell, and each user corresponds to at least one xDR. The DPI system 03 obtains xDRs of the five cells in the city, and predicts, based on the poor QoE prediction model, whether a network transmission rate result of the obtained xDRs of all users is poor QoE or good QoE.

S302: Determine a poor QoE weight corresponding to each cell.

In some embodiments, a quantity of xDRs whose prediction results are poor QoE in each cell is first counted, and then quantities of xDRs whose prediction results are poor QoE in all cells are summed up to obtain a total quantity of xDRs whose results are poor QoE and that are of all users. Then, a ratio of the quantity of xDRs whose prediction results are poor QoE in each cell in the total quantity, that is, the poor QoE weight of each cell, is counted. It may be understood that a network quality status of each cell corresponding to a user requirement may be learned by counting on the poor QoE weight of each cell. The following formula (1) and formula (2) show poor QoE weight formulas:

A total quantity of poor QoE times is:

$$\sum Y=Y1+Y2+...+Yn \text{ (formula 1)}.$$

i indicates a cell number, and Yn indicates a quantity of poor QoE times of an $n^{th}$ cell, that is, a poor QoE statistical value corresponding to each cell.

A poor QoE weight of an $i^{th}$ cell is:

$$Si=Yn/\sum Y \text{ (formula 2)}.$$

For example, a quantity of corresponding xDRs whose prediction results are poor QoE in the cell A is a1, a quantity of corresponding xDRs whose prediction results are poor QoE in the cell B is b1, a quantity of corresponding xDRs whose prediction results are poor QoE in the cell C is c1, a quantity of corresponding xDRs whose prediction results are poor QoE in the cell D is d1, and a quantity of corresponding xDRs whose prediction results are poor QoE in the cell E is e1. In this case, it may be obtained that a poor QoE weight S1 of the cell A is a% =a1/(a1+b1+c1+d1+e1), a poor QoE weight S2 of the cell B is b%=b1/(a1+b1+c1+d1+e1), a poor QoE weight S3 of the cell C is c%=c1/(a1+b1+c1+d1+e1), a poor QoE weight S4 of the cell D is d%=d1/(a1+b1+c1+d1+e1), and a poor QoE weight S5 of the cell E is e% =e1/(a1+b1+c1+d1+e1).

S303: Determine, based on the poor QoE weight of each cell, a sampling ratio of the xDRs corresponding to each cell.

It may be understood that the poor QoE weight of each cell may be used as a reference for the sampling ratio of each cell, so that more xDRs are sampled in a cell with a large poor QoE weight, and fewer xDRs are sampled in a cell with a small poor QoE weight. This avoids a problem that an experience indicator obtained by the service experience quality analysis platform 04 based on the xDRs obtained through sampling cannot truly reflect an actual network quality status required by a user because transmission rates corresponding to most samples in the xDRs obtained through sampling are high.

In some implementations, the sampling ratio of each cell may be the same as or different from the poor QoE weight of each cell.

For example, if the poor QoE weight of the $i^{th}$ cell is Si, a sampling ratio of the $i^{th}$ cell is Yi, and Yi may be equal to or not equal to Si. This is not specifically limited herein.

S304: Sample the xDRs of each cell based on the sampling ratio of each cell, and upload the sampled xDRs as filtered xDRs for network quality analysis.

It may be understood that, after the sampling ratio of each cell is obtained, a quantity of xDRs that need to be sampled in each cell may be determined based on a total quantity of xDRs of each cell, the xDRs of each cell are randomly sampled to obtain the sampled xDRs, and the sampled xDRs are uploaded as the filtered xDRs.

The following formula (3) shows a formula for sampling the xDRs of each cell:

A quantity of samples collected in a first cell is calculated as follows: Mi=VixYi (formula 3).

Vi is a quantity of xDRs of each cell, i=1...N, Mi is a quantity of xDR samples obtained by sampling each cell, and Yi is the sampling ratio.

For example, a total quantity of xDRs of the cell A is V1, a total quantity of xDRs of the cell B is V2, a total quantity of xDRs of the cell C is V3, a total quantity of xDRs of the cell D is V4, and a total quantity of xDRs of the cell E is V5. In this case, a quantity of samples collected in the cell Ais V1xY1, a quantity of samples collected in the cell B is V2xY2, a quantity of samples collected in the cell C is V3xY3, a quantity of samples collected in the cell D is V4xY4, and a quantity of samples collected in the cell E is V5*Y5. Then, a corresponding quantity of xDRs are randomly sampled from the xDRs in each cell, to obtain sampled xDRs. A sample set sampled in the cell A is denoted as C1. A sample set sampled in the cell B is denoted as C2. A sample set sampled in the cell C is denoted as C3. A sample set sampled in the cell D is denoted as C4. A sample set sampled in the cell E is denoted as C5.

The sample set C1 sampled in cell A, the sample set C2 sampled in cell B, the sample set C3 sampled in cell C, the sample set C4 sampled in cell D, and the sample set C5 sampled in cell E are used as the filtered xDRs. In addition, the filtered samples are uploaded to the service experience quality analysis platform 04, and the service experience quality analysis platform 04 performs network optimization based on the obtained xDRs.

It may be understood that the foregoing uses an example in which the network impact factor is the network transmission rate for description. In some other embodiments, when the network impact factor relates to any network impact factor, for example, a pipeline indicator such as an application usage status, a service usage status, and round trip time (Round Trip Time, RTT), and an experience indicator such as a page loading delay, the sampling ratio of each cell can be determined in the foregoing manner. Then, the sampled xDRs are used for network quality analysis.

It may be understood that an execution sequence of step S301 to step S304 is merely an example. In some other embodiments, another execution sequence may be used, or some steps may be split or combined. This is not limited herein.

It may be understood that the prediction model used by the DPI system 03 may also be updated periodically.

The following describes a method for determining a prediction model corresponding to a network impact factor. An example in which the poor QoE prediction model is determined is used for specific description.

FIG. 4 is a flowchart of a method for obtaining a poor QoE prediction model through machine learning model training by using a feature training sample according to some embodiments of this application. Specific steps are as follows:

S401: Obtain xDRs of a preset ratio by randomly sampling obtained xDRs.

In some embodiments, xDRs that are in an area and that are obtained in a period may be used to determine the poor QoE prediction model. The obtained xDRs are randomly sampled to obtain the xDRs of the preset ratio, and the xDRs of the preset ratio are used for subsequent model training. The preset ratio is manually set, for example, may be 10% or 20%.

For example, 10% of xDR samples may be obtained by randomly sampling the obtained xDRs of the five cells shown in FIG. 3B in a period.

S402: Extract a network transmission rate feature from xDRs of each preset ratio, and determine a poor QoE label or a good QoE label corresponding to each xDR.

It may be understood that the xDR includes a plurality of parameter features, for example, a cell ID of a cell, an uplink traffic rate, a downlink traffic rate, and an application type of the cell. Features related to the network transmission rate are extracted from each xDR. The xDRs are labeled based on the features related to the network transmission rate. The poor QoE label or good QoE label corresponding to each xDR is determined.

For example, when a feature rate (for example, the uplink traffic rate or the downlink traffic rate) corresponding to a network transmission rate does not reach a preset rate threshold (for example, 50 kb/s), the xDR is labeled as poor QoE. When a feature rate corresponding to the network transmission rate reaches the preset rate threshold (for example, 50 kb/s), the xDR is labeled as good QoE.

S403: Obtain a feature training sample of the machine learning model based on the labeled xDRs of the preset ratio.

It may be understood that feature extraction processing may be performed on the labeled xDRs of the preset ratio, to obtain xDRs including the network transmission rate feature and the corresponding labels. For the xDR, some irrelevant information may be removed, and certainly, the irrelevant information may be retained. The processed xDR and the corresponding label are used as a feature training sample of the machine learning model.

For example, 10% of the labeled xDRs that are extracted and that correspond to a feature of the network transmission rate is used as the feature training sample of the machine learning model.

S404: Perform machine learning model training, to obtain a poor QoE prediction model.

It may be understood that the feature training sample is input into the machine learning model, and machine learning model training is performed based on a preset model training parameter, to obtain the poor QoE prediction model. In some embodiments, in a training process, a model output result obtained by inputting the feature training sample into a model may be compared with an expected result (that is, an input label), and then iterative training continues to be performed based on a difference between the expected result and the input label, until a termination condition of model training is met. For example, when the difference between the obtained model output result and the expected result is less than or equal to a difference threshold or a quantity of iterations reaches a preset quantity of iterations, training is stopped to obtain the poor QoE prediction model.

For example, 10% of xDRs including the network transmission rate feature are used as input of the model, a corresponding poor QoE label or a good QoE label is used as an expected result, and a preset quantity of iterations is 50. When an average difference between an output result of the model in each iteration and the expected result is less than a preset difference threshold, training is stopped. Alternatively, training is stopped when a training iteration is reached, to obtain the poor QoE prediction model.

It may be understood that the foregoing uses an example in which the network impact factor is the network transmission rate, and the poor QoE prediction model is obtained by using the machine learning model training method. In some other embodiments, for any other network impact factor, a corresponding prediction model may be obtained in the foregoing manner. For example, if the network impact factor is application usage, an application type feature and a labeled application label (key application/non-key application) may be extracted in advance based on an xDR sample corresponding to network access traffic of a user, and are used as a feature training sample for machine learning model training. A trained "application prediction model" is obtained through machine learning model training. If the network impact factor is service usage, a service type feature and a labeled service label (key service/non-key service) may be extracted in advance based on an xDR sample corresponding to network access traffic of a user, and are used as a feature training samples for machine learning model training. A trained "service prediction model" is obtained through machine learning model training.

It may be understood that an execution sequence of step S401 to step S404 is merely an example. In some other embodiments, another execution sequence may be used, or some steps may be split or combined. This is not limited herein.

FIG. 5 is a scenario in which a poor QoE prediction model is obtained by using a network data analysis function included in a network element defined in 3GPP (the 3rd Generation Partnership Protocol), and a DPI system 03 performs network quality analysis by using the determined poor QoE prediction model according to some embodiments of this application.

As shown in FIG. 5, the scenario includes a DPI system 03, a network data analysis function platform 05, and a service experience quality analysis platform 04.

Specifically, the DPI system 03 includes a parsing module 301, a preset ratio random sampling module 302a, a poor QoE sample module 303a, a poor QoE prediction module 303b, a weighting module 304b, and an N% weighted sampling module 302b.

The network data analysis function platform 05 includes a sample obtaining module 501, a training execution module 502, and a prediction model delivery module 503.

For the DPI system 03, the preset ratio random sampling module 302a and the poor QoE sample module 303a may be used in a prediction module determining process. The poor QoE prediction module 303b, the weighting module 304b, and the N% weighted sampling module 302b are configured to perform an adaptive sampling process on obtained xDRs. In addition, the parsing module 301 needs to be used in both a prediction model determining process and an adaptive sampling process.

For the network data analysis function platform 05, the sample obtaining module 501, the training execution module 502, and the prediction model delivery module 503 are configured to perform a prediction model determining process.

Specifically, for a prediction model determining process, the parsing module 301 is configured to parse a received traffic sample set of a user in an area to obtain the xDRs.

The preset ratio random sampling module 302a is configured to sample, in a random sampling manner, xDRs of a preset ratio by using the obtained xDRs sent by the parsing module 301.

The poor QoE sample module 303a is configured to: perform poor QoE feature extraction on the received xDRs of the preset ratio sent by the preset ratio random sampling module 302a, determine a corresponding poor QoE label or a good QoE label, obtain a poor QoE feature sample used for machine learning model training, and generate a poor QoE feature log to be sent to the network data analysis function platform 05.

The sample obtaining module 501 is configured to: receive the poor QoE feature log sent by the DPI system 03, and parse the poor QoE feature log to obtain a feature training sample used for model training.

The training execution module 502 is configured to: input the received feature training sample sent by the sample obtaining module 501 into the machine learning model, and perform iterative training based on a preset model training parameter to obtain a trained poor QoE prediction model.

The prediction model delivery module 503 is configured to deliver the trained poor QoE prediction model obtained by the training execution module 502 to the DPI system 03.

Therefore, the DPI system 03 may obtain a poor QoE prediction model used to predict the obtained xDRs of each cell.

For an adaptive sampling process,
the parsing module 301 parses obtained traffic of each cell in an area, sends an xDR obtained through parsing to the poor QoE prediction module 303b, and sends the xDR obtained through parsing to the N% weighted sampling module 302b.

The poor QoE prediction module 303b is configured to receive the poor QoE prediction model delivered by the network data analysis function platform 05, and is further configured to: obtain the xDR obtained by the parsing module 301 through parsing, and predict the obtained xDR by using the poor QoE prediction model, to obtain a poor QoE prediction result.

The weighting module 304b is configured to determine, based on the poor QoE prediction result obtained by the poor QoE prediction module 303b, a poor QoE weight corresponding to each cell.

The N% weighted sampling module 302b is configured to determine a sampling ratio of each cell based on the poor QoE weight obtained by the weighting module 304, and sample xDRs of each cell based on the sampling ratio of each cell to obtain sampled xDRs. The sampled xDRs are reported as filtered xDRs to the service experience quality analysis platform 04. The service experience quality analysis platform 04 performs network quality analysis based on the obtained xDRs.

It may be understood that FIG. 5 merely shows a scenario in which the network impact factor is the network transmission rate. In some other embodiments, the scenario may alternatively be a scenario corresponding to any one of the foregoing network impact factors. Details are not described herein again.

FIG. 6 is a procedure in which the DPI system 03 interacts with the network data analysis function platform 05 in a manner of "subscription-event-based reporting" defined by 3GPP according to some embodiments of this application. A specific process is as follows.

S601: The network data analysis function platform 05 initiates a subscription request to the DPI system 03, to request to report a feature corresponding to a network impact factor.

In some embodiments, the network data analysis function platform 05 initiates a subscription request to the DPI system 03, to request a collection device to report a feature corresponding to the network impact factor. The subscription request initiated by the network data analysis function platform 05 to the DPI system 03 includes an event ID. Event IDs corresponding to different network impact factors are defined differently. For example, for a network transmission rate, the event ID is defined as a poor QoE feature log. For application usage, the event ID is defined as an application traffic sequence log. For service usage, the event ID is defined as a service traffic sequence log. The collection device may correspond to a server of the DPI system 03.

S602: After receiving the subscription request, the DPI system 03 generates a feature log.

In some embodiments, after receiving the subscription request, the DPI system 03 generates the feature log based on a feature training sample.

S603: The DPI system 03 sends a notify message to the network data analysis function platform 05.

In some embodiments, the notify message includes the event ID, a collection device ID, and the feature log. For example, the event ID, a server ID corresponding to the DPI system 03, and the poor QoE feature log are included.

S604: The network data analysis function platform 05 performs model training based on the feature log in a received message, to obtain a poor QoE prediction model.

S605: The DPI system 03 requests the prediction model by using a request message.

In some embodiments, the request message includes an analysis ID. Analysis IDs corresponding to different network impact factors are defined differently. For example, for a network transmission rate, the analysis ID is defined as poor QoE model analysis. For application usage, the event ID is defined as application traffic model analysis. For service usage, the event ID is defined as service traffic model analysis.

S606: The network data analysis function platform 05 sends the prediction model to the DPI system 03.

In some embodiments, the network data analysis function platform 05 sends the analysis ID including the prediction model to the DPI system 03.

It may be understood that an execution sequence of step S601 to step S606 is merely an example. In some other embodiments, another execution sequence may be used, or some steps may be split or combined. This is not limited herein.

For ease of understanding the technical solutions in embodiments of this application, the following describes a hardware structure of a server on which the DPI system 03 or the service experience quality analysis platform 04 may be deployed.

Further, FIG. 7 is a diagram of a structure of a server 200 according to some embodiments of this application. As shown in FIG. 7, the server 200 configured to perform network optimization shown in FIG. 3A provided in this application may include one or more processors 201, a system memory 202, a non-volatile memory (Non-Volatile Memory, NVM) 203, an input/output (I/O) device 204, a communication interface 205, and system control logic 206 configured to couple the processor 201, the system memory 202, the non-volatile memory 203, the communication interface 204, and the input/output (I/O) device 205.

The processor 201 may include one or more single-core or multi-core processors. In some embodiments, the processor 201 may include any combination of a general-purpose processor and a dedicated processor (for example, a graphics processing unit, an application processor, or a baseband processor). In some embodiments, the processor 201 may be configured to execute network optimization logic.

The system memory 202 is a volatile memory, for example, a random access memory (Random-Access Memory, RAM) or a double data rate synchronous dynamic random access memory (Double Data Rate Synchronous Dynamic Random Access Memory, DDR SDRAM). The system memory is configured to temporarily store data and/or instructions. For example, in some embodiments, the system memory 202 may be configured to store an executable program used to implement the network optimization method.

The non-volatile memory 203 may include one or more tangible and non-transitory computer-readable media for storing data and/or instructions. In some embodiments, the non-volatile memory 203 may include any proper non-volatile memory such as a flash memory and/or any proper non-volatile storage device such as a hard disk drive (Hard Disk Drive, HDD) a compact disc (Compact Disc, CD), a digital versatile disc (Digital Versatile Disc, DVD), or a solid-state drive (Solid-State Drive, SSD). In some embodiments, the non-volatile memory 203 may alternatively be a removable storage medium, for example, a secure digital (Secure Digital, SD) storage card.

In particular, the system memory 202 and the non-volatile memory 203 may respectively include a temporary copy and a permanent copy of instructions 207. The instructions 207 may include program instructions that enable, when executed by at least one of the processors 201, the server 200 to implement the network optimization method provided in embodiments of this application.

The input/output (I/O) device 204 may include a user interface that enables a user to interact with the server 200. For example, in some embodiments, the input/output (I/O) device 204 may include an output device such as a display, configured to display a software system used in the server 200, and may further include an input device such as a keyboard, a mouse, or a touchscreen. A maintenance engineer of the server 200 may interact with the server 200 by using the user interface and the input device such as the keyboard, the mouse, or the touchscreen.

The communication interface 205 may include a transceiver, configured to provide a wired or wireless communication interface for the server 200, to communicate with any other suitable device through one or more networks. In some embodiments, the communication interface 205 may be integrated into another component of the server 200. For example, the communication interface 205 may be integrated into the processor 201. In some embodiments, the server 200 may communicate with another device through the communication interface 205.

The system control logic 206 may include any proper interface controller, to provide any proper interface for another module of the server 200. For example, in some embodiments, the system control logic 206 may include one or more memory controllers, to provide an interface connected to the system memory 202 and the non-volatile memory 203.

In some embodiments, at least one of the processors 201 may be packaged together with logic of one or more controllers used for the system control logic 206, to form a system in package (System in Package, SiP). In some other embodiments, at least one of the processors 201 may be integrated on a same chip with logic of one or more controllers used for the system control logic 206, to form a system-on-chip (System-on-Chip, SoC).

It may be understood that a structure shown in this embodiment of the present invention does not constitute a specific limitation on the server 200. In some other embodiments of this application, the server 200 may include more or fewer components than those shown in the figure, or combine some components, or split some components, or have different component arrangements. The components shown in the figure may be implemented by hardware, software, or a combination of software and hardware.

Embodiments of a mechanism disclosed in this application may be implemented in hardware, software, firmware, or a combination of these implementations. Embodiments of this application may be implemented as a computer program or program code executed in a programmable system. The programmable system includes at least one processor, a storage system (including a volatile memory, a non-volatile memory, and/or a storage element), at least one input device, and at least one output device.

The program code may be applied to input instructions to perform the functions described in this application and generate output information. The output information may be used in one or more output devices in a known manner. For a purpose of this application, a processing system includes any system having a processor like a digital signal processor (DSP), a microcontroller, an application-specific integrated circuit (ASIC), or a microprocessor.

The program code may be implemented by using a high-level programming language or an object-oriented programming language, to communicate with the processing system. The program code can also be implemented in an assembly language or a machine language when needed. The mechanisms described in this application are not limited to the scope of any particular programming language. In any case, the language may be a compiled language or an interpreted language.

In some cases, the disclosed embodiments may be implemented in hardware, firmware, software, or any combination thereof. The disclosed embodiments may alternatively be implemented as instructions that are carried or stored on one or more transitory or non-transitory machine-readable (for example, computer-readable) storage media and that may be read and executed by one or more processors. For example, the instructions may be distributed through a network or by another computer-readable medium. Therefore, the machine-readable medium may include any mechanism for storing or transmitting information in a machine (for example, a computer) readable form, including but not limited to a floppy disk, a compact disc, an optical disc, a read-only memory (CD-ROMs), a magnetic optical disk, a read-only memory (ROM), a random access memory (RAM), an erasable programmable read-only memory (EPROM), an electrically erasable programmable read-only memory (EEPROM), a magnetic card, an optical card, a flash memory, or a tangible machine-readable memory used to transmit information (for example, a carrier, an infrared signal, or a digital signal) by using a propagating signal in an electrical, optical, acoustic, or another form over the Internet. Therefore, the machine-readable medium includes any type of machine-readable medium suitable for storing or transmitting an electronic instruction or information in a machine (namely, computer)-readable form.

In the accompanying drawings, some structure or method features may be shown in a particular arrangement and/or sequence. However, it should be understood that such a particular arrangement and/or sequence may not be needed. In some embodiments, these features may be arranged in a manner and/or order different from those/that shown in the descriptive accompanying drawings. In addition, inclusion of the structural or method features in a particular figure does not imply that such features are needed in all embodiments, and in some embodiments, these features may not be included or may be combined with other features.

It should be noted that all units/modules mentioned in device embodiments of this application are logical units/modules. Physically, one logical unit/module may be one physical unit/module, may be a part of one physical unit/module, or may be implemented by a combination of a plurality of physical units/modules. Physical implementations of these logical units/modules are not the most important, and a combination of functions implemented by these logical units/modules is a key to resolve the technical problem provided in this application. In addition, to highlight an innovative part of this application, a unit/module that is not closely related to resolving the technical problem provided in this application is not introduced in the foregoing device embodiments of this application. This does not mean that there are no other units/modules in the foregoing device embodiments.

It should be noted that: In the examples and specification of this patent, relational terms such as first and second are merely used to distinguish one entity or operation from another, and do not necessarily require or imply any such actual relationship or order between these entities or operations. Moreover, the terms "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude other same elements existing in the process, the method, the article, or the device which includes the element.

Although this application has been illustrated and described with reference to some preferred embodiments of this application, a person of ordinary skill in the art should understand that various changes may be made to this application in form and detail without departing from the spirit and scope of this application.

## Claims

1. A network quality analysis method, applied to a network quality analysis system, wherein the method comprises:

    determining a quantity of first network access records that meet a network impact factor condition in network access records of each cell in a target area, and a total quantity of first network access records that meet the network impact factor condition in network access records of all cells in the target area;
    determining a sampling ratio of the network access records of each cell based on the quantity of first network access records corresponding to each cell and the total quantity of first network access records corresponding to all the cells;
    obtaining, from the first network access record of each cell based on the sampling ratio of the network access records of each cell, a second network access record corresponding to each cell; and
    determining a network quality analysis result of the target area based on the second network access record corresponding to each cell.

**2.** The method according to claim 1, comprising: presetting at least one of a transmission rate threshold, an application type, and a service type that meet the network impact factor condition, wherein
meeting the network impact factor condition comprises at least one of the following:

a network transmission rate corresponding to the network access record is less than the preset transmission rate threshold;
an application corresponding to the network access record belongs to the preset application type; and
a service corresponding to the network access record belongs to the preset service type.

**3.** The method according to claim 2, wherein the preset application type comprises at least one of the following:
a video application, a payment application, and a social application.

**4.** The method according to claim 2, wherein the preset service type comprises a video service and/or a voice over IP service.

**5.** The method according to any one of claims 2 to 4, wherein a manner of determining the first network access record that meets the network impact factor condition in the network access records of each cell comprises:

determining, based on a network transmission rate corresponding to each network access record of each cell and the preset transmission rate threshold, that a network access record whose network transmission rate is less than the preset transmission rate threshold in the network access records of each cell is the first network access record; and/or
determining, based on an application feature corresponding to each network access record of each cell and a relationship between the application feature and the preset application type, that a network access record whose corresponding application belongs to the preset application type in the network access records of each cell is the first network access record; and/or
determining, based on a service feature corresponding to each network access record of each cell and a relationship between the service feature and the preset service type, that a network access record whose corresponding service belongs to the preset service type in the network access records of each cell is the first network access record.

**6.** The method according to any one of claims 1 to 4, wherein determining the sampling ratio of the network access records of each cell based on the quantity of first network access records corresponding to each cell and the total quantity of first network access records corresponding to all the cells comprises:
using a ratio of the quantity of first network access records corresponding to each cell in the total quantity of first network access records corresponding to all the cells as the sampling ratio of the network access records of each cell.

**7.** A network quality analysis system, comprising a deep packet parsing system and a service experience quality analysis platform, wherein
the deep packet parsing system is configured to:

determine a quantity of first network access records that meet a network impact factor condition in network access records of each cell in a target area, and a total quantity of first network access records that meet the network impact factor condition in network access records of all cells in the target area;
determine a sampling ratio of the network access records of each cell based on the quantity of first network access records corresponding to each cell and the total quantity of first network access records corresponding to all the cells;
obtain, from the first network access record of each cell based on the sampling ratio of the network access records of each cell, a second network access record corresponding to each cell; and
send the second network access record corresponding to each cell to the service experience quality analysis platform; and
the service experience quality analysis platform is configured to:
determine a network quality analysis result of the target area based on the second network access record corresponding to each cell.

**8.** The network quality analysis system according to claim 7, wherein the deep packet parsing system is further configured to preset at least one of a transmission rate threshold, an application type, and a service type that meet the network impact factor condition, wherein
the network impact factor condition comprises at least one of the following:

a network transmission rate corresponding to the network access record is less than the preset transmission rate threshold;
an application corresponding to the network access record belongs to the preset application type; and

a service corresponding to the network access record belongs to the preset service type.

**9.** An electronic device, comprising:

one or more processors; and
one or more memories, wherein the one or more memories store one or more programs, and when the one or more programs are executed by the one or more processors, the electronic device is enabled to perform the network quality analysis method according to any one of claims 1 to 6.

**10.** A computer-readable storage medium, wherein the storage medium stores instructions, and when the instructions are executed on a computer, the computer is enabled to perform the network quality analysis method according to any one of claims 1 to 6.

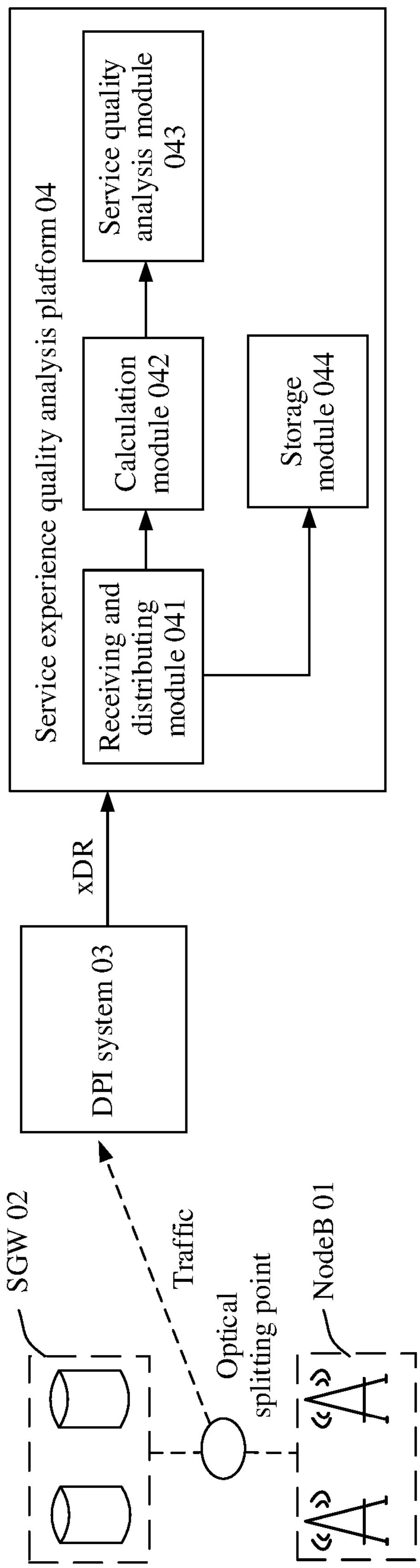
SGW 02
Traffic
Optical splitting point
NodeB 01
DPI system 03
xDR
Service experience quality analysis platform 04
Receiving and distributing module 041
Calculation module 042
Service quality analysis module 043
Storage module 044

FIG. 1

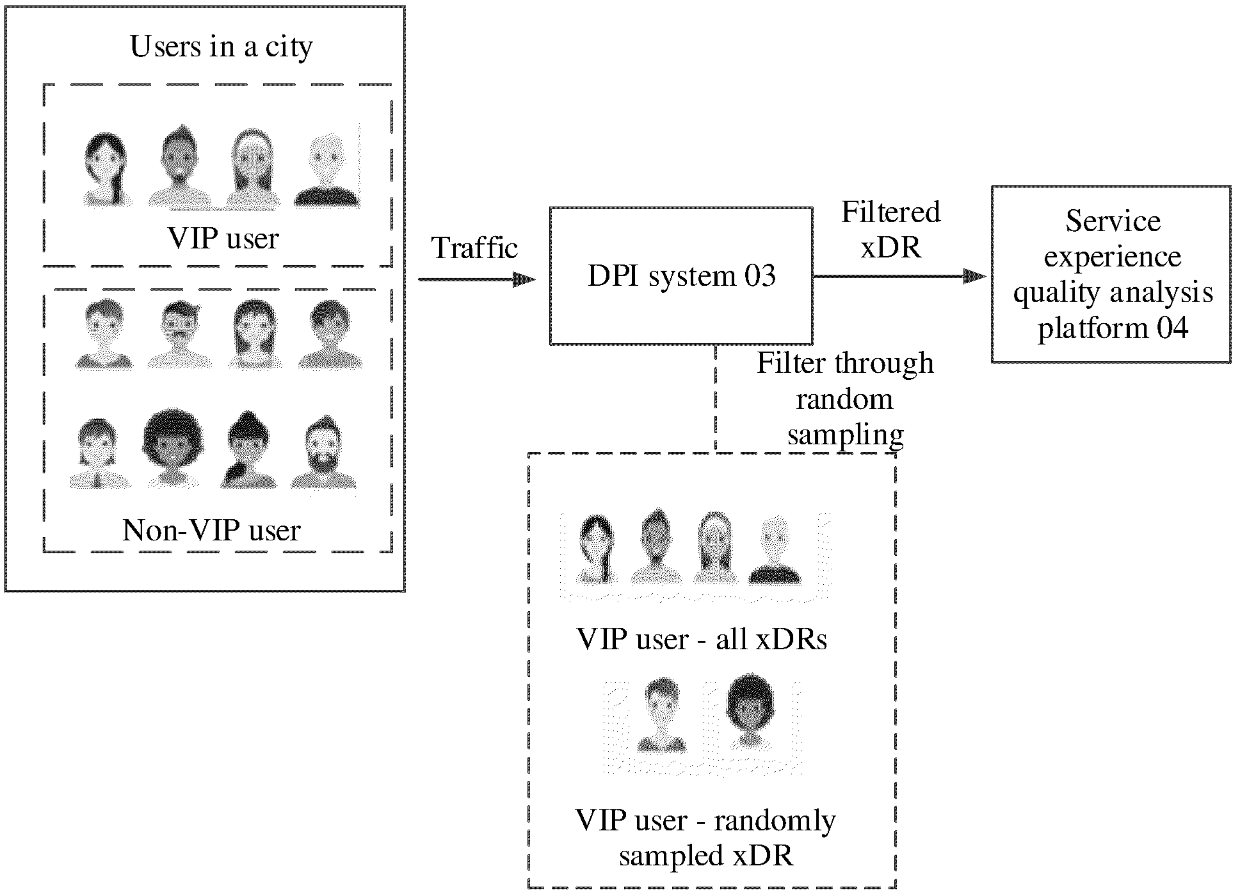
Users in a city
VIP user
Non-VIP user
Traffic
DPI system 03
Filtered xDR
Service experience quality analysis platform 04
Filter through random sampling
VIP user - all xDRs
VIP user - randomly sampled xDR

FIG. 2

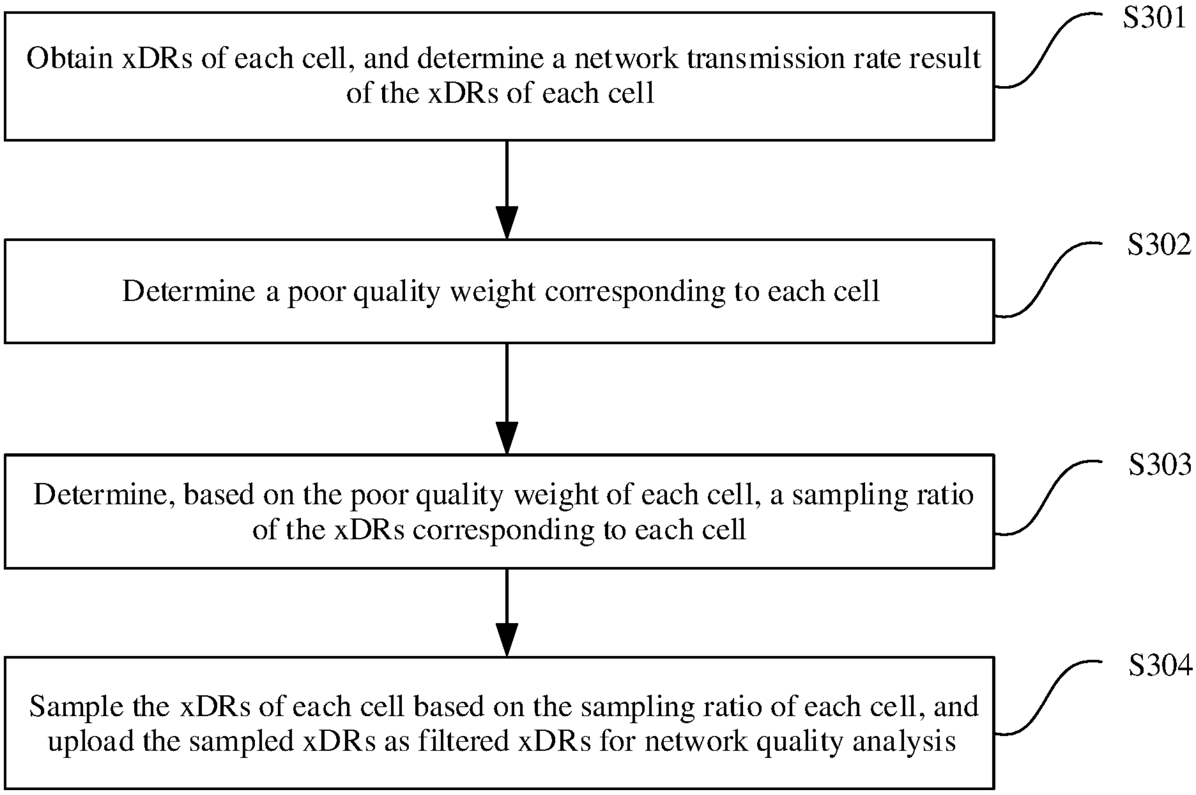
Obtain xDRs of each cell, and determine a network transmission rate result of the xDRs of each cell
S301
Determine a poor quality weight corresponding to each cell
S302
Determine, based on the poor quality weight of each cell, a sampling ratio of the xDRs corresponding to each cell
S303
Sample the xDRs of each cell based on the sampling ratio of each cell, and upload the sampled xDRs as filtered xDRs for network quality analysis
S304

FIG. 3A

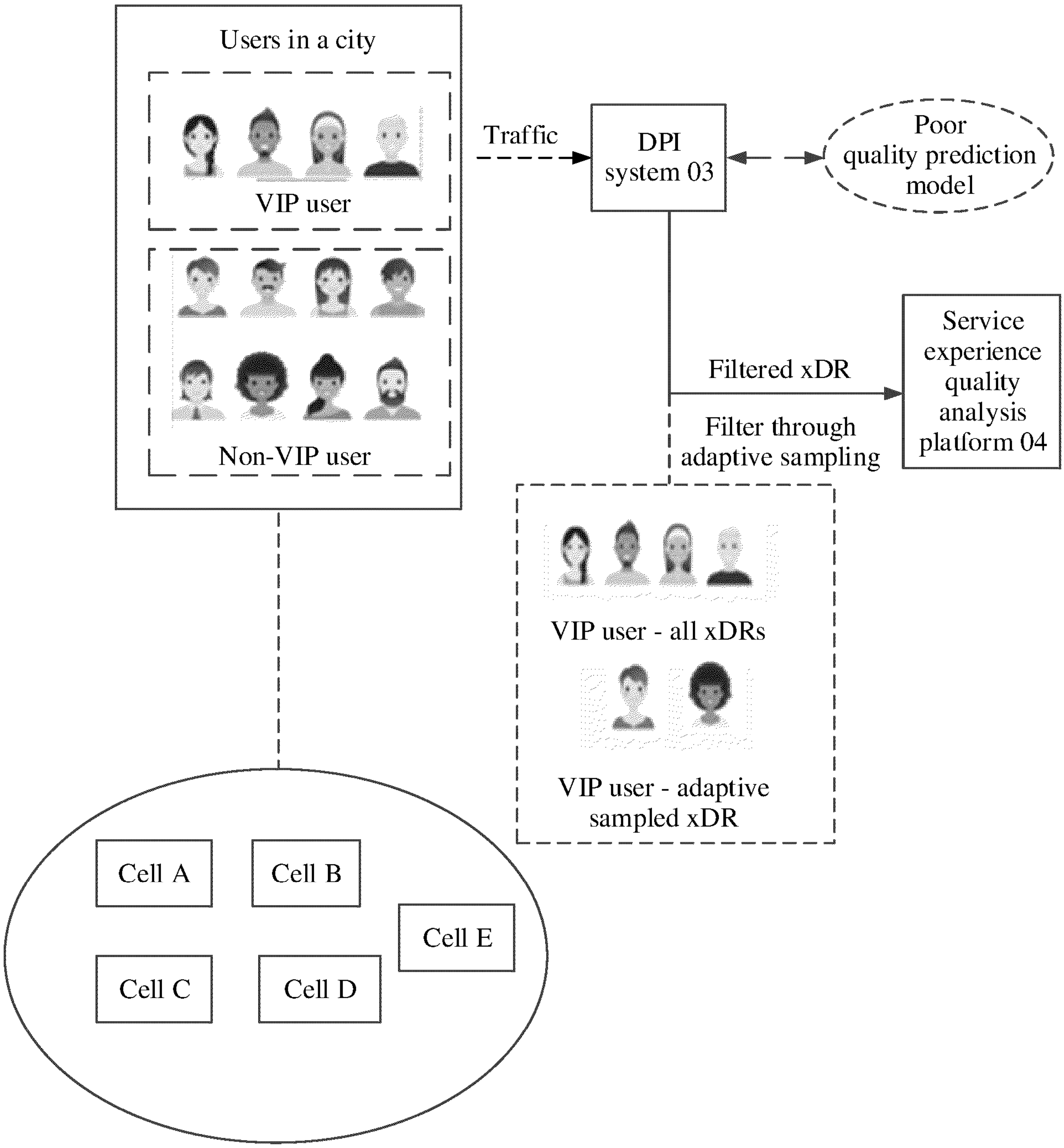
Users in a city
VIP user
Non-VIP user
Traffic
DPI system 03
Poor quality prediction model
Filtered xDR
Filter through adaptive sampling
Service experience quality analysis platform 04
VIP user - all xDRs
VIP user - adaptive sampled xDR
Cell A
Cell B
Cell C
Cell D
Cell E

FIG. 3B

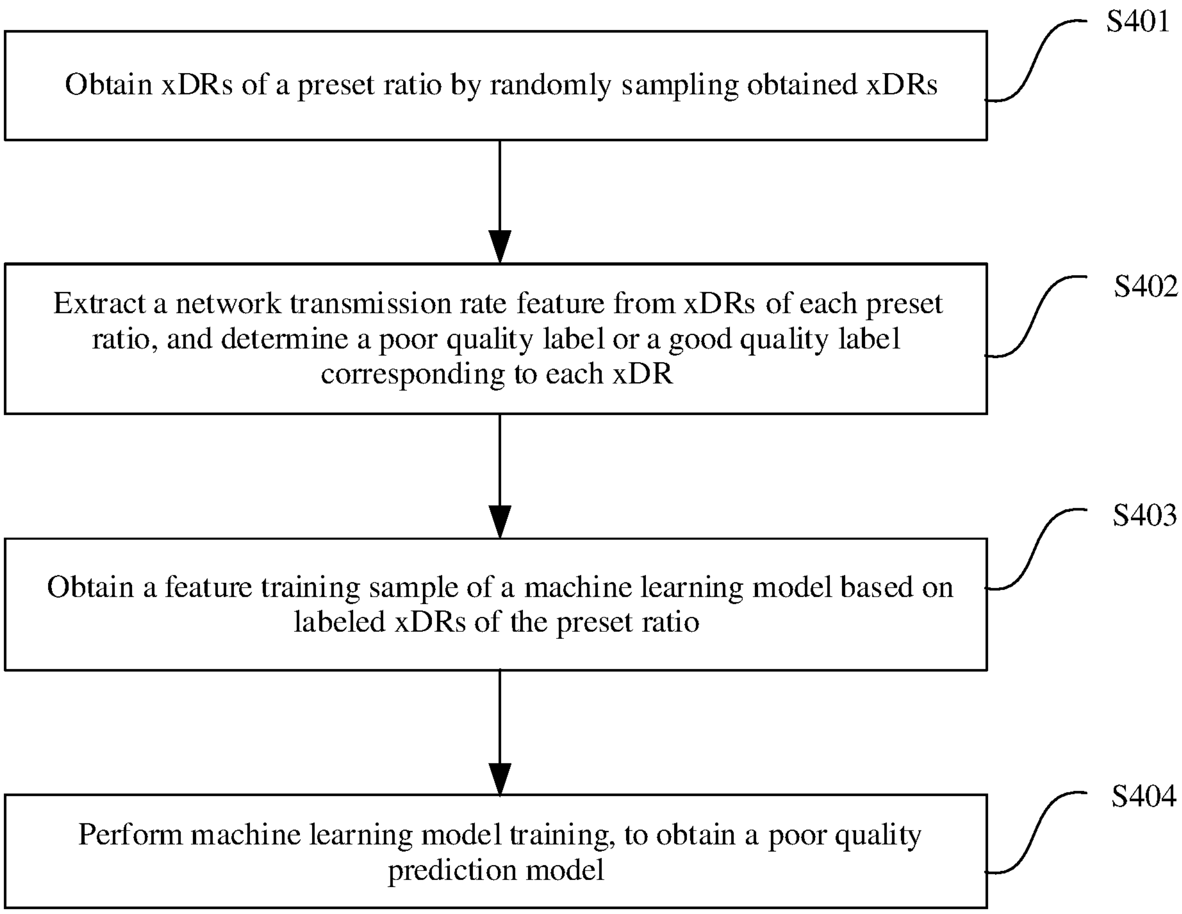
S401
Obtain xDRs of a preset ratio by randomly sampling obtained xDRs
S402
Extract a network transmission rate feature from xDRs of each preset ratio, and determine a poor quality label or a good quality label corresponding to each xDR
S403
Obtain a feature training sample of a machine learning model based on labeled xDRs of the preset ratio
S404
Perform machine learning model training, to obtain a poor quality prediction model

FIG. 4

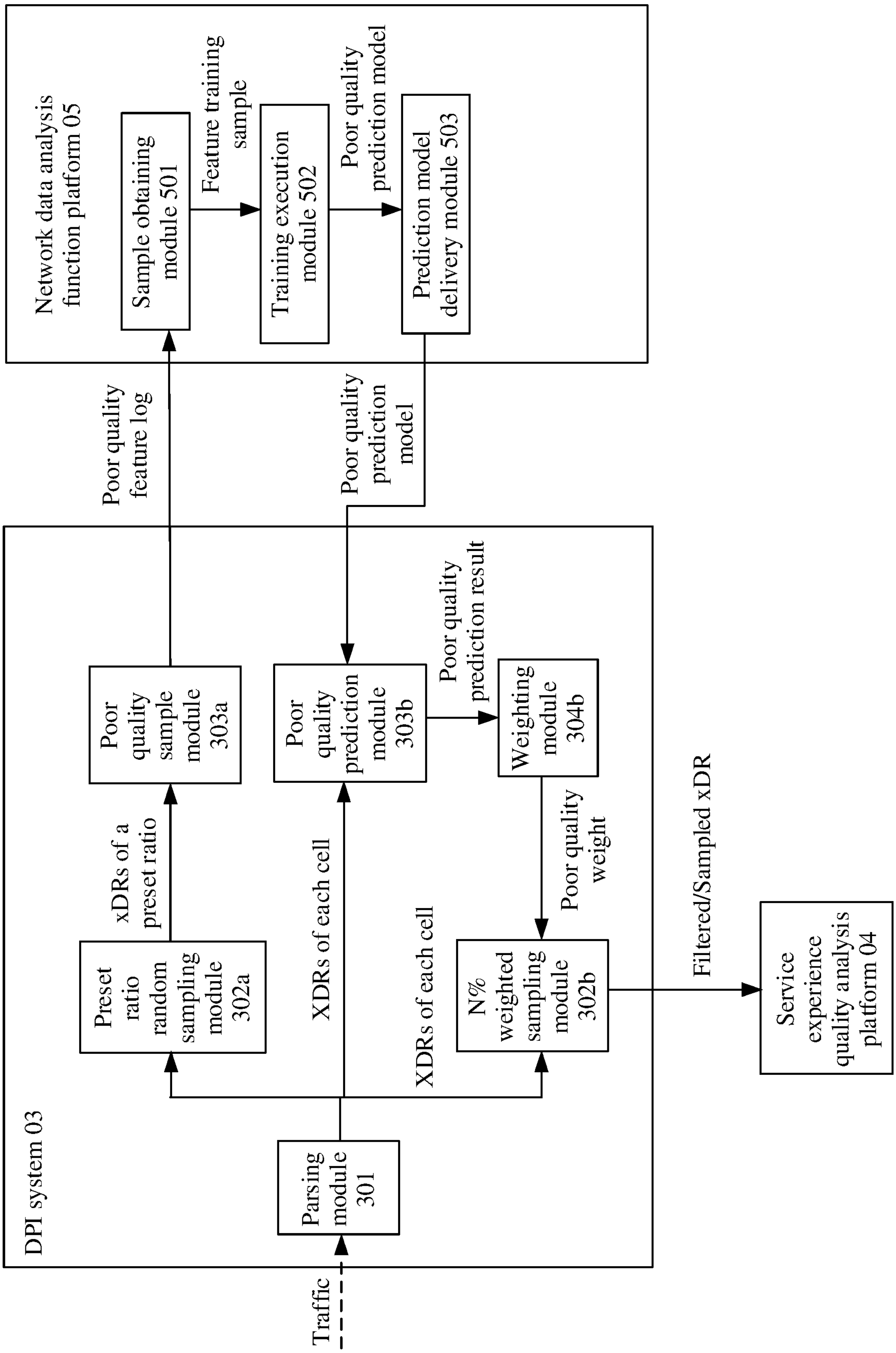
Network data analysis function platform 05
Sample obtaining module 501
Feature training sample
Training execution module 502
Poor quality prediction model
Prediction model delivery module 503
Poor quality feature log
Poor quality prediction model
DPI system 03
Traffic
Parsing module 301
Preset ratio random sampling module 302a
xDRs of a preset ratio
Poor quality sample module 303a
XDRs of each cell
Poor quality prediction module 303b
Poor quality prediction result
Weighting module 304b
Poor quality weight
XDRs of each cell
N% weighted sampling module 302b
Filtered/Sampled xDR
Service experience quality analysis platform 04

FIG. 5

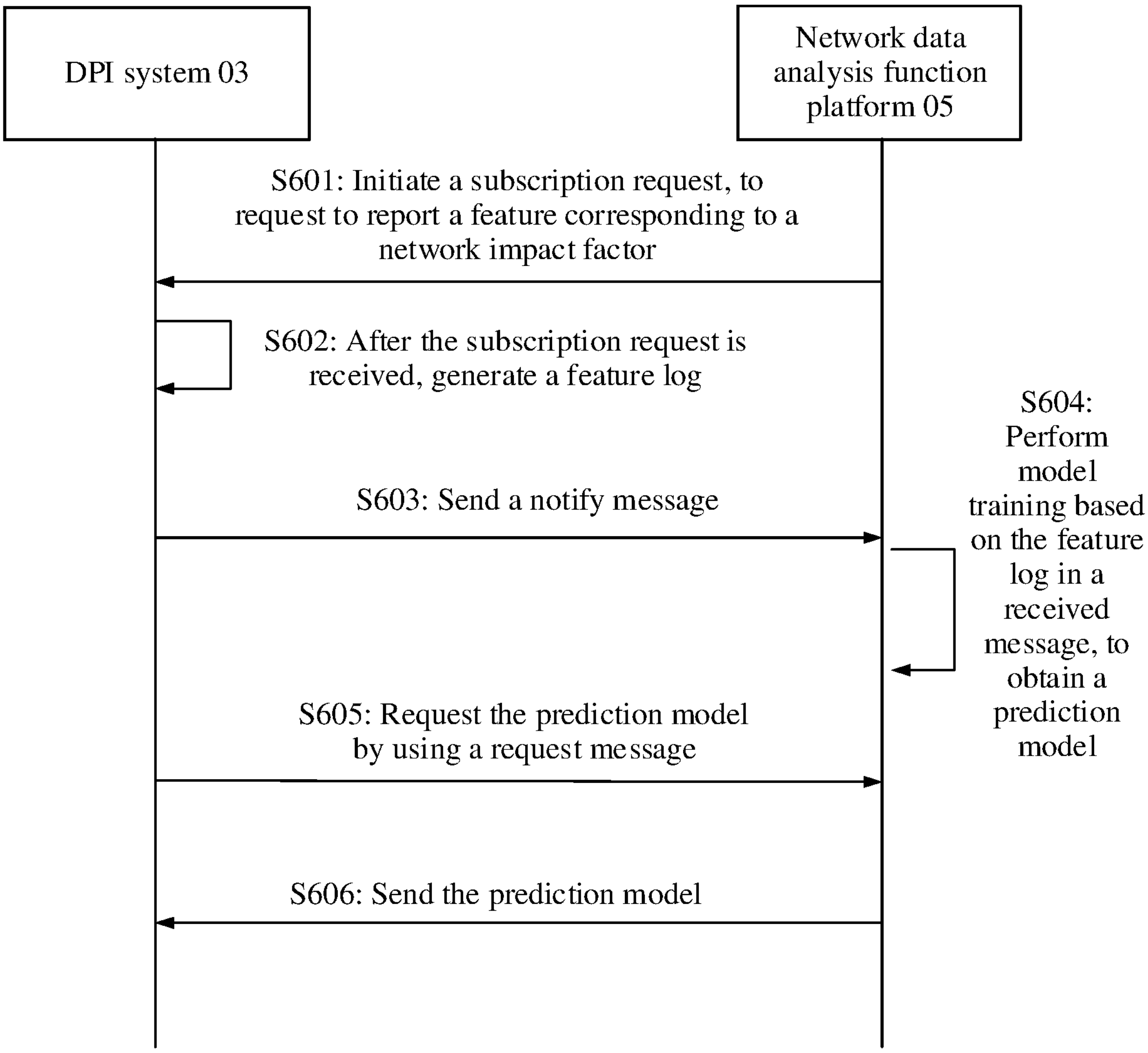
DPI system 03
Network data analysis function platform 05
S601: Initiate a subscription request, to request to report a feature corresponding to a network impact factor
S602: After the subscription request is received, generate a feature log
S603: Send a notify message
S604: Perform model training based on the feature log in a received message, to obtain a prediction model
S605: Request the prediction model by using a request message
S606: Send the prediction model

FIG. 6

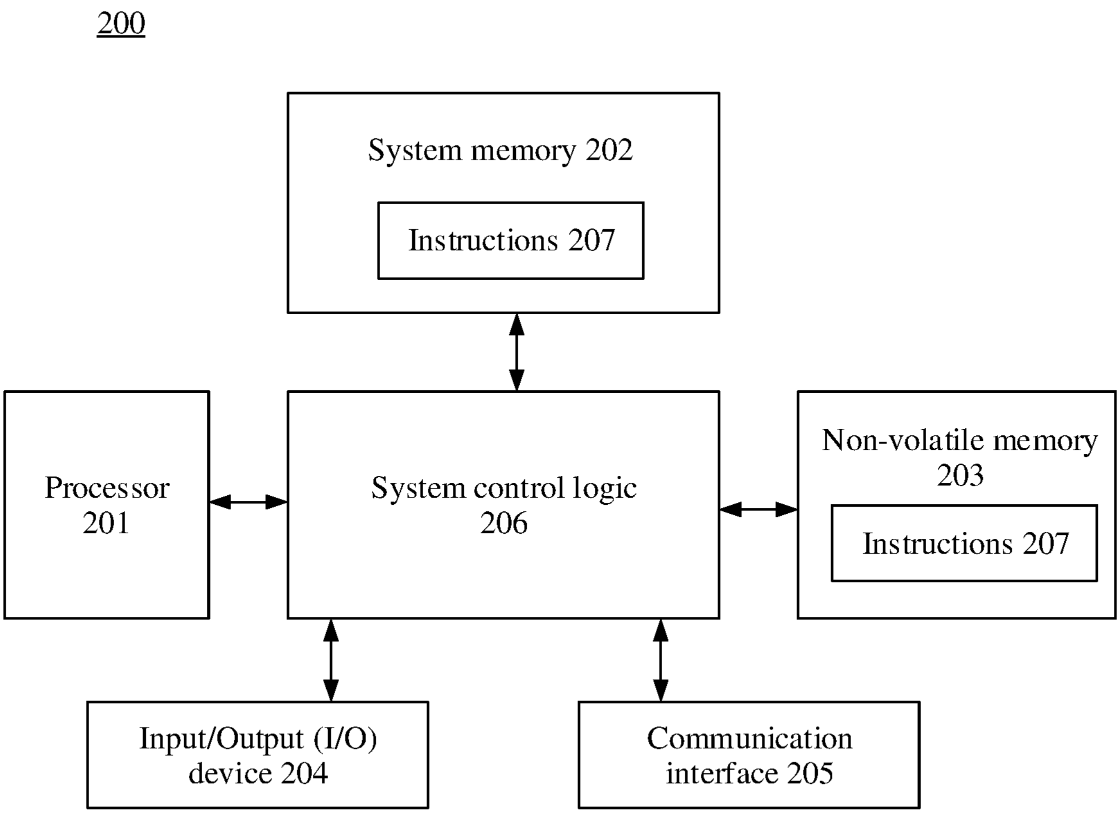
200
System memory 202
Instructions 207
Processor 201
System control logic 206
Non-volatile memory 203
Instructions 207
Input/Output (I/O) device 204
Communication interface 205

FIG. 7

**INTERNATIONAL SEARCH REPORT**

International application No.
**PCT/CN2023/132389**

**A. CLASSIFICATION OF SUBJECT MATTER**

H04L43/028(2022.01)i

According to International Patent Classification (IPC) or to both national classification and IPC

**B. FIELDS SEARCHED**

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

CNTXT; DWPI; ENTXT; 3GPP; CNKI: 百分比, 百分数, 比例, 比率, 权重, 比重, 系数, 采集, 采样, 收集, 单据, 条目, 记录, 详单, 账单, 调, 改, 换, 新, 替, 自适应, 小区, 用户, 质差, 质量, percent+, proportion, cofficient, weight+, sampl+, xdr, record, adjust, modif+, updat+, cell, user, quality

**C. DOCUMENTS CONSIDERED TO BE RELEVANT**

| Category* | Citation of document, with indication, where appropriate, of the relevant passages | Relevant to claim No. |
|---|---|---|
| A | CN 104113452 A (CHINA UNITED NETWORK COMMUNICATIONS GROUP CO., LTD.) 22 October 2014 (2014-10-22) entire document | 1-10 |
| A | CN 115150901 A (CHINA MOBILE GROUP FUJIAN CO., LTD. et al.) 04 October 2022 (2022-10-04) entire document | 1-10 |
| A | CN 109005556 A (WUHAN HONGXIN TECHNICAL SERVICES CO., LTD.) 14 December 2018 (2018-12-14) entire document | 1-10 |
| A | CN 109962803 A (CHINA MOBILE GROUP SICHUAN COMPANY LIMITED et al.) 02 July 2019 (2019-07-02) entire document | 1-10 |
| A | CN 102076009 A (CHINA MOBILE GROUP GUANGDONG COMPANY LIMITED) 25 May 2011 (2011-05-25) entire document | 1-10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **26 December 2023** | **03 January 2024** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**

International application No.
**PCT/CN2023/132389**

**C. DOCUMENTS CONSIDERED TO BE RELEVANT**

| Category* | Citation of document, with indication, where appropriate, of the relevant passages | Relevant to claim No. |
|---|---|---|
| A | WO 2021171103 A1 (TELEFONAKTIEBOLAGET LM ERICSSON (PUBL)) 02 September 2021 (2021-09-02) entire document | 1-10 |

Form PCT/ISA/210 (second sheet) (July 2022)

**INTERNATIONAL SEARCH REPORT**
**Information on patent family members**

International application No.
**PCT/CN2023/132389**

| Patent document cited in search report | Publication date (day/month/year) | Patent family member(s) | Publication date (day/month/year) |
|---|---|---|---|
| CN 104113452 A | 22 October 2014 | None | |
| CN 115150901 A | 04 October 2022 | None | |
| CN 109005556 A | 14 December 2018 | None | |
| CN 109962803 A | 02 July 2019 | None | |
| CN 102076009 A | 25 May 2011 | None | |
| WO 2021171103 A1 | 02 September 2021 | EP 4111728 A1 | 04 January 2023 |
| | | US 2023071942 A1 | 09 March 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202211640801